# EUROPEAN PATENT SPECIFICATION

(11) **EP 3 465 358 B1**
(45) Date of publication and mention of the grant of the patent: **04.11.2026**
(21) Application number: 16904542.4
(22) Date of filing: 08.08.2016
(51) Int. Cl.: G05B 9/00, H02J 1/00, G05F 1/46, G05F 1/10

(54) **AUTOMATIC REAL-TIME LOAD SIDE VOLTAGE OPTIMIZATION**
AUTOMATISCHE LASTSEITIGE SPANNUNGSOPTIMIERUNG IN ECHTZEIT
OPTIMISATION AUTOMATIQUE EN TEMPS RÉEL DE TENSION CÔTÉ CHARGE

(30) Priority: 07.06.2016 IN 201621019470
(43) Date of publication of application: 10.04.2019
(73) Proprietor: Jhaveri, Tejas, Maharashtra, Mumbai-400098 (IN)
(72) Inventor: Jhaveri, Tejas, Maharashtra, Mumbai-400098 (IN)
(74) Representative: Hellmich, Wolfgang
(86) International application number: PCT/IN2016/000204
(87) International publication number: WO 2017/212497

(56) References cited:
- EP-A1- 2 744 070
- WO-A1-2014/152934
- AU-A1- 2013 254 943
- AU-A1- 2013 254 943
- US-A1- 2013 253 719
- US-A1- 2013 253 719
- US-A1- 2015 057 825

## Description

The term 'electrical supply end/supply end' refers to a point in an electrical circuit that provides electrical power for consumption.

The term 'electrical load' or 'load-side' is a point in an electrical circuit that consumes the electrical power supplied by the supply end.

The present disclosure is related to systems and methods for measuring electrical power. Particularly, the present disclosure is related to a system that controls and optimizes voltage.

Typically, the technique of voltage optimization is used at a load-side to set a target voltage supplied to electrical equipment at 220V instead of 230V/240V supplied by a grid. Lowering the value of the target voltage not only brings about a reduction in energy consumption and also improves the operational life of the electrical equipment connected to the load-side. The technique of setting the target voltage at a level lower than the voltage supplied by the grid suffers from the limitation that a single value of target voltage does not take into consideration the variations in terms of the electrical load applied upon the electrical equipment across various time-intervals and accordingly fails to provide for efficient performance of the electrical equipment when the electrical load applied to the electrical equipment is not a constant (and varies with the time). Typically, an optimal voltage is the voltage at which a particular electrical equipment operates at its highest efficacy and consumes the least amount of electrical energy. The electrical equipment dissipates least amount of heat while operating at an optimal voltage. However, the value of optimal voltage varies based on the type of the electrical equipment, make and manufacturers of the electrical equipment. Further, the optimal voltage varies in accordance with loading patterns of the electrical equipment and also based on equipment degradation. In order to achieve the optimal voltage, it is necessary that an voltage optimizing system is operated at a location closer to the load-side so that the optimal voltage values could be estimated on a continuous basis for varying loads. Prior arts in this field include inter-alia a method for performing voltage adjustments at the grid level to improve grid stability and energy efficiency of client loads. Such voltage adjustments at the grid level allow for a maximum of five percent of the electrical energy to be saved. Moreover, grid-side voltage optimization and Conservation Voltage Reduction (CVR) is slow in response as compared to load-side real-time voltage optimization. Existing prior arts also disclose a system for voltage regulation/stabilization which accepts an incoming voltage with high variation (for example 230V +/-15%) and converts it to an output voltage with low variation (for example 230V +/-1%). However, in this case the output voltage is not considered as a function of the load behavior. Typically, in such a (prior art) system, the voltage is set to a fixed value irrespective of the corresponding loading conditions. However, existing prior arts do not disclose a system for forecasting energy saving in conjunction with voltage optimization even though it is estimated that the phenomenon of load-side voltage optimization provides for an increase of up to twenty-five percent in energy savings. There does not exist a system vis-à-vis the existing prior arts that performs real-time voltage optimization at load-side for a combination of loads. In view of the drawbacks mentioned hitherto, there exists a need for a system that considers the variations in terms of the electrical load applied to electrical equipment across various time-intervals, and performs real-time voltage optimization at the load-side for a combination of loads. Further, there exists a need for a system that forecasts energy savings based on the optimized voltage.

WO 2014/152934 A1 discloses an energy savings device that improves electric utility grid stability by reducing power demand at a point of consumption and also a method for reducing power demand on an electric utility grid at the point of consumption. The method involves monitoring a power signal characteristic, obtaining a stability parameter for the utility grid, determining a stability condition based on the monitored power signal characteristic and the stability parameter, and regulating, at the point of consumption, an amount of energy received from the utility grid based on the determined stability condition. The power signal characteristic and the stability parameter could be used to determine a rotor angle stability probability of failure, including small angle rotor stability, transient rotor angle stability, and short term rotor angle stability over time. The power signal characteristic and stability parameter could be used to determine a grid frequency stability probability of failure, including short term frequency stability and long term frequency stability over time. The power signal characteristic and stability parameter is used to determine a grid voltage stability probability of failure, including short term voltage stability and long term voltage stability over time. The power signal characteristics include one or more of voltage, voltage variation, frequency, frequency variation, and rotor stator angle harmonics. The power signal characteristics could be obtained at a power consumer location. The amount of energy received from the electric utility grid could be regulated based on a combination of at least one probability of electric utility grid power failure and at least one constant.

The primary object of the present disclosure is to provide a system for automatically determining optimal voltages suitable for a range of electrical loads.

Another object of the present disclosure is to provide a system that integrates a plurality of sensors, microcontroller and voltage regulator into a single housing.

Another object of the present disclosure is to provide a system that senses at least one component of electrical power delivered to an electrical load and measures loading patterns corresponding to the sensed component of electrical power.

Another object of the present disclosure is to provide a system that automatically regulates output voltage based on historical optimal voltage values. Yet another object of the present disclosure is to provide a system that stores historical optimal voltage values corresponding to a plurality of predetermined loading patterns.

Yet another object of the present disclosure is to provide a system that independently predicts energy savings based on the loading pattern (corresponding to a particular electrical equipment), the sensed component of electrical power and the determined optimal voltage values.

Yet another object of the present disclosure is to provide a system that ensures a longer lifespan of electrical equipment connected thereto.

The shortcomings discussed in the background section are addressed by a system that facilitates real-time voltage optimization at (a) the load-side. The present disclosure teaches a system for determining optimal voltage values suitable for a range of electrical loads. The system envisaged by the present disclosure integrates a plurality of sensors, microcontroller and voltage regulator into a single housing. The system senses at least one component of electrical power delivered to an electrical load and measures loading patterns corresponding to the sensed component of electrical power. Further, the system automatically regulates the output voltage based on predetermined optimal voltage values. Further, the system predicts energy savings based on the loading pattern, the sensed component of electrical power and the determined optimal voltage value thereby ensuring a longer lifespan for electrical equipment connected thereto.

The system envisaged by the present disclosure includes a plurality of sensors, and preferably at least some of the sensors (constituting a first set of sensors) are configured to sense a component of electrical power delivered to the electrical load (load-side), and the remainder of the sensors (preferably constituting a second set of sensors) are configured to sense a component of electrical power generated at an electrical supply end. Each of the sensor groups are configured to generate measurement data corresponding to the sensed component of electrical power delivered to the electrical load and the electrical supply end respectively. The system includes a microcontroller configured to analyze the measurement data and generate at least one power loading pattern characterized by a plurality of predetermined electrical parameters. The microcontroller determines an optimal reference value corresponding to the (sensed) component of electrical power delivered to an electrical load, based on the underlying power loading pattern. The microcontroller triggers a voltage regulator to regulate the component of electrical power (delivered to the electrical load) to the optimal reference value by iteratively adjusting the predetermined electrical parameters. Further, the microcontroller estimates cumulative energy savings achieved at the electrical load based on a comparative analysis of the sensed component of electrical power and the regulated component of electrical power. In accordance with the present disclosure, the (sensed) component of electrical power is at least one of an input voltage, output voltage, and output current. The predetermined electrical parameters characterizing the power loading pattern are selected from the group consisting of active power, reactive power, apparent power, Total Harmonic Distortion (THD) and Power Factor (PF). The optimal reference value is a value indicating the optimal voltage for a particular loading pattern.

The other objects, features and advantages will occur to those skilled in the art from the following description of the preferred embodiment and the accompanying drawings in which:
FIG. 1 is a block diagram of a system for real-time load-side voltage optimization, in accordance with an embodiment of the present disclosure;
FIG. 2 is a flowchart illustrating a method for optimizing load voltage performed by the system, according to an embodiment of the present disclosure;
FIG. 3 is a flowchart illustrating the predetermined (mathematical) function executed by the microcontroller for determining optimal voltage, in accordance with an embodiment of the present disclosure;
FIG. 4 is a flowchart illustrating a method for determining fitting parameter, in accordance with an embodiment of the present disclosure;
FIG. 5 is a flowchart illustrating a method for calculating energy savings, in accordance with an embodiment of the present disclosure;

The various embodiments of the present disclosure disclose a system that determines voltage operation points that would be the most energy efficient voltage operation points within the operating range of a particular electrical equipment. The system integrates a plurality of sensors, microcontroller and voltage regulator into a single housing. The system measures the component of electrical power generated at the supply end as well as delivered to an electrical load. The electrical component is selected from the group consisting of the input voltage, output voltage and output current. The system generates a loading pattern corresponding to the sensed (measured) component of electrical power, and subsequently analyses the loading pattern to determine the corresponding optimal voltage.

Further, the system envisaged by the present disclosure predicts energy savings based on the loading pattern, the sensed (measured) component of electrical power and the determined optimal voltage value.

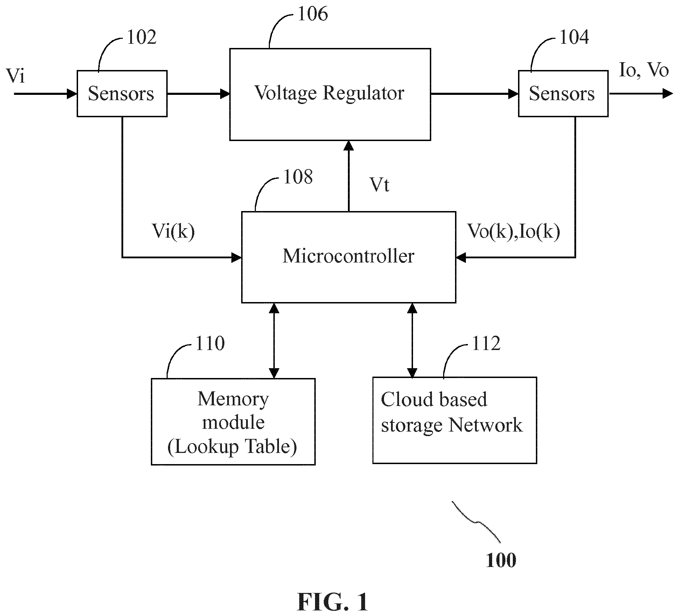

FIG. 1 is a block diagram of a system 100 for real-time load-side voltage optimization, in accordance with one embodiment of the present disclosure. The system 100 determines optimal voltage values for operating a particular electrical equipment on a plurality of loads. The system 100 includes a first set of sensors collectively represented by 102, a second set of sensors collectively represented by 104, a voltage regulator 106, a microcontroller 108, a memory module 110, and a cloud-based storage network 112. The first set of sensors 102 are configured to sense a component of electrical power generated at a supply end. The second set of sensors 104 are configured to sense a component of electrical power delivered to an electrical load from the supply end. The first set of sensors 102 and the second set of sensors 104 generate measurement data corresponding to sensed component of electrical power generated at the supply end and the sensed component of electrical power electrical load.

The measurement data includes at least the input voltage Vi, output voltage Vo, and output current lo sensed (measured) at both the supply end as well as at the electrical load (load- end). The first set of sensors 102 and the second set of sensors 104 include at least one of a voltage sensor and a current sensor. At a given time-instance k, the values Vi(k), Vo(k) and lo(k) are transmitted to the microcontroller 108 via an analog to digital converter (ADC) (not shown in figures). In an exemplary scenario, values of voltage and current are measured for a time-instance k. In another exemplary scenario, the values of voltage and the current are measured from the data collected by sampling the output voltage and output current multiple times during a particular power cycle. The measured data is analyzed by the microcontroller 108 to determine power loading patterns.

The power loading pattern is characterized by a plurality of electrical parameters. The electrical parameters characterizing the power loading pattern are selected from a group consisting of the active power, reactive power, apparent power, Total Harmonic Distortion (THD) and Power Factor (PF). The microcontroller 108 is further configured to determine an optimal reference value corresponding to the (sensed) component of electrical power delivered to an electrical load, based on an underlying power loading pattern. In accordance with the present disclosure, the component of electrical power sensed by the first set of sensors 102 and the second set of sensors 104 is voltage, and the optimal reference value is a value indicating the optimal voltage.

In accordance with the present disclosure, the microcontroller 108 is further configured to trigger the voltage regulator 106 to regulate, i.e. adjust the component of electrical power (preferably, voltage) delivered to the electrical load, to the optimal reference value by iteratively adjusting predetermined electrical parameters (characterizing the power loading pattern indicative of the voltage delivered to the electrical load) which include at least the active power, reactive power, apparent power, Total Harmonic Distortion (THD) and Power Factor (PF). The optimal voltage varies with power loading patterns of the electrical equipment as well as based on the electronic equipment degradation. Further, the microcontroller 108 estimates cumulative energy savings achieved at the electrical load (load-side) by performing a comparative analysis of the voltage delivered to the electrical load and the optimal voltage.

In accordance with the present disclosure, the system 100 continuously monitors the electrical parameters at the electrical load for varying loading conditions. For each power loading pattern, corresponding electrical parameters are stored in the memory module 110. Further, the memory module 110 stores a plurality of historical power loading patterns and corresponding historical optimal voltage values. The memory module 110 also stores historical data related to energy usage and the said historical data is made available to the microcontroller 108 for calculating energy costs and for forecasting energy savings.

In accordance with the present disclosure, the microcontroller 108 accesses the memory module 110 and compares a first power loading pattern corresponding to a first measurement data with the historical power loading patterns stored therein. Further, the microcontroller 108 identifies at least one historical power loading pattern matching the first power loading pattern. If a match is found, the microcontroller 108 extracts a historical optimal voltage value corresponding to the matched power loading pattern. The microcontroller 108 triggers the voltage regulator 106 to regulate the output voltage delivered to the electrical load to the extracted historical optimal voltage value. If no historical loading patterns are found matching the first power loading pattern, then the optimal voltage is determined by the microcontroller 108 by executing a predetermined mathematical function.

In accordance with the present disclosure, the microcontroller 108 is further configured to forecast a load-side output power based on the measurement data corresponding to the sensed component of electrical power delivered at the supply end. The microcontroller 108 calculates a load-side output power based on the optimal voltage value. The microcontroller 108 compares the forecasted load-side output power (corresponding to the measurement data) with the calculated load-side output power corresponding to the optimal voltage value. The microcontroller 108 further forecasts the cumulative energy savings by calculating a difference between the forecasted load-side output power and the calculated load-side output power.

In accordance with the present disclosure, the system 100 includes a cloud-based network 112 (preferably, a cloud-based storage network) communicably coupled (preferably, in a wireless manner) to the microcontroller 108. The microcontroller 108 transfers at least one of the measurement data, the historical power loading patterns, historical optimal voltage values, and values corresponding to cumulative energy savings, to the cloud-based network 112.

In accordance with the present disclosure, the system 100 further incorporates wired or wireless communication devices to enable interaction with the cloud-based network 112. In accordance with the present disclosure, the cloud-based network 112 stores data corresponding to relevant additional parameters and further uses the stored data for computing the amount of saved electrical energy. The cloud-based network 112 performs an analysis for determining optimal voltages based on longer-term trends considering additional parameters such as the time of the day, the day of the week, and the rate of Occupancy. In accordance with the present disclosure, the first set of sensors 102, the second set of sensors 104, the voltage regulator 106, the microcontroller 108, and the memory module 110 are incorporated into a single housing.

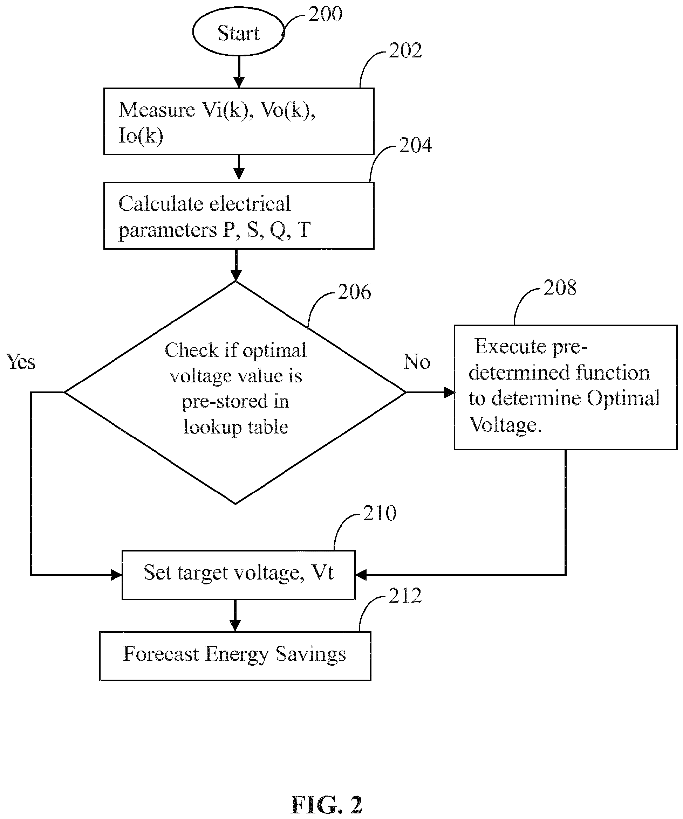

FIG. 2 is a flowchart illustrating a method for optimizing load-side voltage. The input voltage Vi, output voltage Vo, and output current lo is measured by a first set of sensors and a second set of sensors positioned at supply end and load-side respectively. At a given instance of time k, the parameters Vi(k), Vo(k) and lo(k) are sensed by the first set of sensors and the second set of sensors respectively (202). The measurement data (preferably numerical values) corresponding to the sensed parameters is transmitted to a microcontroller via an analog to digital converter (ADC). At any instance k, a power loading pattern corresponding to the measured data is generated by the microcontroller (204).

The power loading pattern, hereafter referred to as loading pattern is characterized by electrical parameters including but not limited to active power (P), Reactive Power (Q), Apparent power (S), Power factor, Total Harmonic Distortion (T). Active power (P) is a product of voltage across the electrical load and current flowing through a DC circuit. Reactive Power (Q) is a power merely absorbed and returned in the electrical load due to its reactive properties. Apparent power (S) is the total power in an electronic circuit, which is dissipated and absorbed by the electronic circuit. Further, the apparent power is a combination of reactive power and true power. The power factor is the ratio of the real power flowing to the load to the apparent power in an electronic circuit.

Further, the loading pattern generated (determined) by the microcontroller is compared with a plurality of historical loading patterns stored in the memory module (206). Every historical loading pattern stored in a lookup table of the memory module is mapped to a corresponding optimal voltage value. If the loading pattern (generated by the microcontroller) is found to match at least one historical power loading pattern stored in the memory module, a historic optimal voltage value corresponding to the matched power loading pattern is extracted from the memory module (210).

If the determined loading pattern is not found to match any of the historical power loading patterns, then a predetermined (mathematical) function is executed by the microcontroller to determine a new optimal voltage value (208). Further, a voltage regulator is triggered to regulate the output voltage delivered to the electrical load to either the historical optimal voltage value or the new optimal voltage value (210). The historical optimal voltage value or the new optimal voltage value is set as target voltage Vt for the voltage regulator. Further, energy savings achieved at the electrical load is forecasted based on a comparative analysis of the voltage input to the electrical load and the target voltage (212).

In accordance with the present disclosure, the method of forecasting energy savings includes forecasting the load-side output power based on the measurement data Vi sensed at the supply end. Further, a load-side output power based on the optimal voltage value (determined by the microcontroller) is calculated. The forecasted load-side output power corresponding to the measurement data Vi is compared with the calculated load-side output power corresponding to the optimal voltage value. The resultant energy savings is forecasted by calculating a difference between the forecasted load-side output power and the calculated load-side output power.

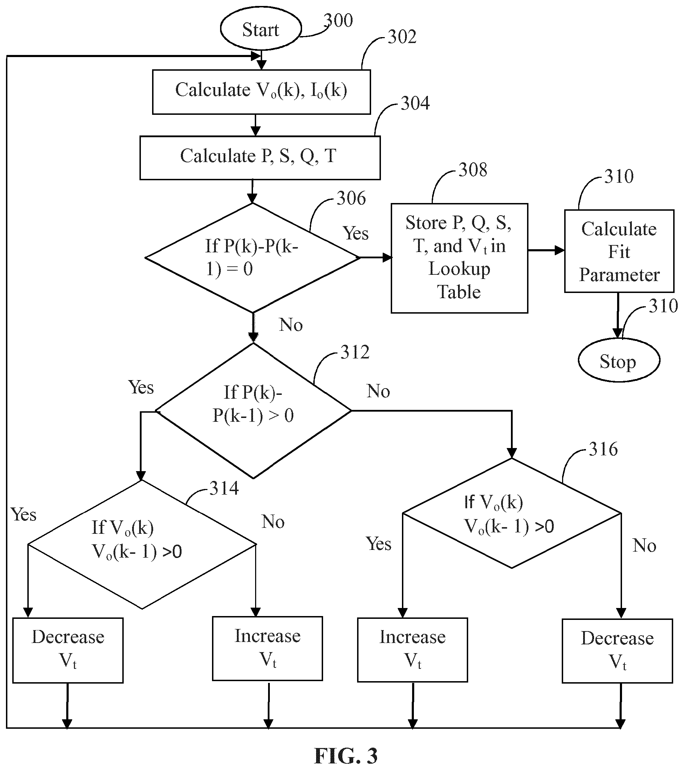

FIG. 3 is a flowchart illustrating the predetermined mathematical function executed by the microcontroller for determining an optimal voltage, in accordance with an embodiment of the present disclosure. The flowchart begins at step 300.The output voltage Vo, and output current lo are measured by a second set of sensors positioned at the electrical load. At a given instance of time k, parameters such as Vo(k) and lo(k) are sensed by the second set of sensors, and subsequently the measurement data corresponding to Vo(k) and lo(k) is generated (302). The measurement data is transferred to a microcontroller via an analog to digital converter (ADC). At any instance k, power loading pattern corresponding to the measurement data is determined by the microcontroller (304). The power loading pattern is characterized by electrical parameters such as active power (P), Reactive Power (Q), Apparent power (S), Power factor, Total Harmonic Distortion (T).

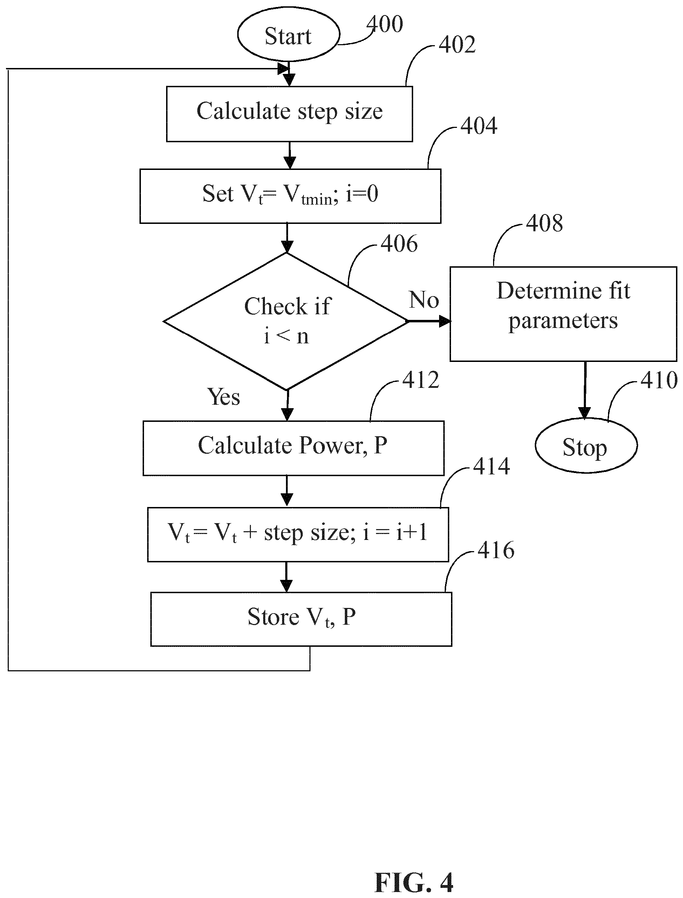

In accordance with the present disclosure, P(k) is the active power at the instance k. P(k-1) is the active power at an instance k-1. The power P(k) and P(k-1) are compared to determine if the difference between them is zero (306). If the difference between P(k) and P(k-1) is zero (implying that output power at the instance k is equal to the output power at the instance k-1), then the power loading pattern corresponding to P(k) is stored in a lookup table of a memory module (308) for further reference. Further, fit parameters are calculated by the microcontroller based on the power loading patterns (310). Fit parameters are a set of coefficients used in predicting load-side power and energy consumption at any instance k. The process of calculating fit parameters is further elaborated in FIG. 4.

The power P(k) and P(k-1) are compared to check whether the difference between P(k) and P(k-1) is greater than zero (312). If the difference between active power at two instances k and k-1 is greater than zero, then the power utilized by the electrical load is determined to have been increased as a consequence of the increase in output voltage. Further, voltage values Vo(k) and Vo(k-1) are compared by the microcontroller to determine whether the difference between Vo(k) and Vo(k-1) is greater than zero. The target voltage Vt is changed based on the variations in Vo(k) and Vo(k-1) at step 314, and 316. The target voltage Vt is changed to observe the change in output power. Depending on the corresponding change in active power P(k), the target voltage Vt is either increased or decreased. Thus, by comparing the changes in power consumption, decisions are made if the change in target voltage is close to the optimal voltage. The process of increase or decrease in target voltage Vt is repeated until a change in target voltage Vt doesn't cause a significant change in the output power. At a point where there is no variation in the output power, the corresponding target voltage value Vt is determined as the optimal voltage. Once the optimal voltage is determined, it is stored in the lookup table along with the corresponding loading pattern.

FIG. 4 is a flowchart illustrating a method for determining fitting parameters, in accordance with an embodiment of the present disclosure. Fitting parameters are used in calculating energy savings. Fitting parameters are determined by fitting a model (a set of instructions executed by a microcontroller used to calculate energy savings) to a mean and standard deviation of input voltage. The coefficients of fitting parameters are used to estimate the active power. The flowchart begins at step 400. A step size is calculated for a period of time-based on determined historical optimal voltage values (402). Step size is calculated by the equation: (Vt max -Vt min)/n, wherein Vt max is a maximum target voltage selected from the historical optimal voltage values, Vt max is a minimum target voltage selected from the historical optimal voltage values, and n is a total time duration for which fit parameters are calculated. The target voltage Vt is set as Vt min when the value of i is zero, where i is an integer varying from zero to n (404). The value of i is compared with n to determine if value of i is less than n (406).

Further, the steps 412 to 416 are iteratively executed as long as the value of i is less than n (406). The load-side output power is calculated based on the measurement data provided by the (412). The load-side output power is calculated using the equation: $P = Vo \left(k\right) Io \left(k\right) ;$ where Vo(k) is an output voltage Vo at an instance k, and lo(k) is an output current lo at an instance k. Further, a new value of Vt is calculated by adding the (value of) step size to current value of Vt (414). The new value of Vt is stored as optimal voltage (corresponding to the measurement data) in a memory module. Further, the calculated value of Power P is also stored in the memory module (416).

If the value of i is equal to or greater than n, then a predetermined process is executed to determine the fitting parameters (408). In order to calculate the fitting parameters, a minimum of n-1 data points are analyzed from the measurement data. Calculating the fitting parameters involves plotting the n-1 measurements of output Power for a plurality of corresponding output voltages. Further, a mean and standard deviation corresponding to the plot of output power against the output voltage are determined by implementing a predetermined fitting function. Further, the fitting parameters are derived based on the mean and the standard deviation. The fit parameters are stored in the lookup table along with the optimal voltages for each of the load conditions.

The fitting parameters are used in the following equation to compute the load-side output power: ${P}_{k} = {\sum }_{i = 0}^{n} {aiV}^{i} \left(k\right) ;$ where Pk is a forecasted load long -side output Power at an instance k, Vi(k) is an input voltage at an instance k, a is a coefficient of fitting parameter estimated over a period of time n. For every combination of loading conditions, the coefficient parameters a0, a1, ...., an are determined. The forecasted load-side output Power Pk and the calculated value of load-side output Power P is further utilized in estimating energy consumption and energy savings at the electrical load.

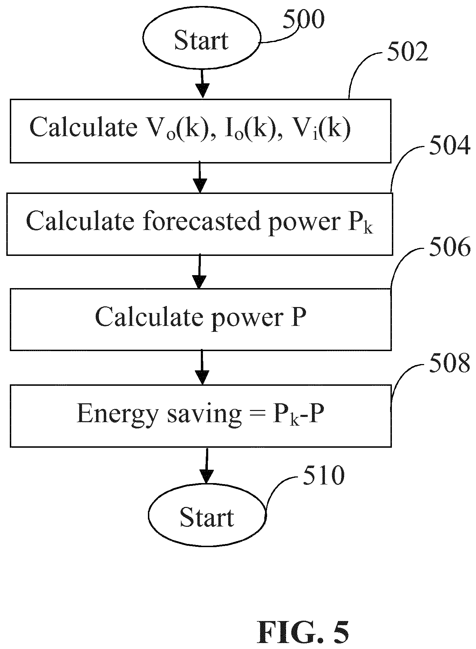

FIG. 5 is a flowchart illustrating a method for calculating energy savings, in accordance with an embodiment of the present disclosure. The energy savings are predicted in real-time-based on determined optimal voltage values. The flowchart begins at step 500. A load-side output Power P and energy consumption is calculated for the determined optimal voltage value (502). Further, a load-side power Pk is estimated considering the voltage generated at a supply end without voltage optimization (504). Subsequently, energy consumption without voltage optimization is determined.

The load-side output power is calculated using the equation: $P = Vo \left(k\right) Io \left(k\right) ;$

Where Vo(k) is an output voltage Vo at an instance k, and lo(k) is an output current lo at an instance k. The input voltage and fitting parameters are utilized to predict the load-side output power for measured input voltage. The forecasted load-side output Power is calculated using the equation: ${P}_{k} = {\sum }_{i = 0}^{n} {aiV}^{i} \left(k\right) ;$ where Pk is a forecasted load-side output Power at an instance k, Vi(k) is an input voltage at an instance k, a is a coefficient of fitting parameter estimated over a period of time n. The forecasted load-side output power corresponding to the measurement data is compared with calculated load-side output power corresponding to the optimal voltage value. Further, the resultant energy savings is forecasted by calculating a difference between the forecasted load-side output power corresponding to the measurement data and the calculated load-side output power (508). The flowchart ends at step 510.

In accordance with an embodiment of the present disclosure, the system 100 stores measurement data (provided by the first set of sensors and second set of sensors) on the cloud-based network. Further, a cloud server is triggered to determine the corresponding optimal voltage using certain additional parameters. Examples of additional parameters used in determining the optimal voltage include but are not limited to time of day, day of week, rate of occupancy. The additional parameters are preferably used in estimating the fitting parameters.

In accordance with another embodiment of the present disclosure, the system 100 employs cloud computing to determine minor variations in optimal voltages or energy savings predictions based on data analyzed over longer duration trends and environmental conditions. Examples of techniques used in the cloudlong-based system enables reporting of electrical parameters and energy savings to at least one internetconnected device.

The present disclosure envisages a system for real-time voltage optimization on load-side. The system ensures energy savings for facility using the system. The system ensures longer lifespan of electrical equipment connected to the system. The system provides improved productivity using the electrical equipments connected to the system. The system reduces process/production downtime for facility using the voltage optimization system. The system automatically determines optimal voltages, regulate optimal voltages and predict energy savings by executing predetermined functions in a microcontroller. Thus, facility managers need not study or evaluate optimal voltages and adjust them manually. The system reports energy savings in a comprehensible format (for example, terms of units saved or percentage savings).

## Claims

1. A system (100) for optimizing the output current and output voltage delivered to an electrical load, said system (100) configured to optimize delivery of the output current and output voltage delivered to the electrical load, said system (100) comprising:
a plurality of sensors (102,104), at least some of said sensors (102) configured to sense the output current and output voltage delivered to the electrical load, and remainder of said plurality of sensors (104) configured to sense an input voltage generated at an electrical supply end, each of said plurality of sensors (102, 104) further configured to generate measurement data corresponding to the output current and output voltage delivered to the electrical load and the input voltage generated at said electrical supply end;
a microcontroller (108) configured to analyze the measurement data and generate at least one power loading pattern, based at least in part on analyzed measurement data, said power loading pattern **characterized by** a plurality of predetermined electrical parameters selected from a group consisting of active power, reactive power, apparent power, Total Harmonic Distortion (THD), and Power Factor (PF), said microcontroller configured to continuously monitor said electrical parameters at said electrical load for varying loading conditions;
said microcontroller (108) further configured to determine an optimal reference value corresponding to the output current and output voltage delivered to the electrical load, based on at least said power loading pattern, said microcontroller (108) further configured to trigger a voltage regulator (106) to regulate the output current and output voltage delivered to said electrical load, to said optimal reference value, by iteratively adjusting said predetermined electrical parameters characterizing said power loading pattern;
said microcontroller (108) further configured to forecast a load-side output power based on the measurement data corresponding to the input voltage delivered at the electrical supply end, and by using an equation defined by: ${P}_{k} = {\sum }_{i = 0}^{n} {aiV}^{i} \left(k\right)$*,* wherein Pk is a forecasted load-side output power at an instance 'k', Vi(k) is an input voltage at an instance 'k', 'a' is a coefficient of a fitting parameter estimated over a period of time 'n', said microcontroller (108) further configured to compare forecasted load-side output power with a load-side output power calculated based on the output current and output voltage delivered to the electrical load, and forecast resultant energy savings.

2. The system (100) as claimed in claim 1, wherein said optimal reference value is a value indicating an optimal voltage.

3. The system as claimed in claim 1, wherein said microcontroller (108) further includes a memory module (110) configured to store a plurality of historical power loading patterns and corresponding historical optimal reference values.

4. The system (100) as claimed in claim 1 or 3, wherein said microcontroller (108) is configured to selectively access the memory module (110) and compare the power loading pattern corresponding to the measurement data with each of the historical power loading patterns stored therein, said microcontroller (108) further configured to identify at least one historical power loading pattern matching the power loading pattern corresponding to the measurement data, said microcontroller (108) still further configured to extract an historical optimal reference value corresponding to identified historical power loading pattern, and trigger the voltage regulator (106) to regulate the output current and output voltage delivered to said electrical load, to said historical optimal reference value, by iteratively adjusting the predetermined electrical parameters corresponding to the power loading pattern.

5. The system (100) as claimed in claim 1, wherein said microcontroller (108) is further configured to forecast the resultant energy savings by determining a difference between the forecasted load-side output power and the load-side output power calculated based on the output current and output voltage delivered to the electrical load.

6. The system (100) as claimed in claim 1, wherein said microcontroller (108) is communicably coupled to a cloud-based computer storage network (112), said microcontroller (108) configured to transfer at least one of said measurement data, power loading patterns, optimized reference values, and values corresponding to cumulative energy savings to said cloud-based computer storage network (112).

7. The system (100) as claimed in claim 1, wherein said plurality of sensors (102, 104), said microcontroller (108), and said voltage regulator (106) are incorporated into a single housing.

## Patentansprüche

1. Ein System (100) zur Optimierung des Ausgangsstroms und der Ausgangsspannung, die an eine elektrische Last geliefert werden, wobei das System (100) so konfiguriert ist, dass es die Lieferung des Ausgangsstroms und der Ausgangsspannung, die an die elektrische Last geliefert werden, optimiert, wobei das System (100) umfasst:
eine Vielzahl von Sensoren (102, 104), wobei zumindest einige der Sensoren (102) dazu konfiguriert sind, dass sie den Ausgangsstrom und die Ausgangsspannung, die an die elektrische Last geliefert werden, erfassen, und der Rest der Vielzahl der Sensoren (104) dazu konfiguriert sind, dass sie eine an einem Stromversorgungsende erzeugte Eingangsspannung erfassen, wobei jeder der Sensoren (102, 104) ferner so konfiguriert ist, dass er Messdaten erzeugt, die dem Ausgangsstrom und der Ausgangsspannung, die an die elektrische Last geliefert werden, sowie der an der elektrischen Versorgungsseite erzeugten Eingangsspannung entsprechen;
einen Mikrocontroller (108), der so konfiguriert ist, dass er die Messdaten analysiert und zumindest ein Leistungslastmuster erzeugt, das zumindest teilweise auf den analysierten Messdaten basiert, wobei das Leistungslastmuster durch eine Vielzahl vorbestimmter elektrischer Parameter gekennzeichnet ist, die aus einer Gruppe ausgewählt sind, die aus Wirkleistung, Blindleistung, Scheinleistung, Gesamtklirrfaktor (THD) und Leistungsfaktor (PF) bestehen, wobei der Mikrocontroller so konfiguriert ist, dass er die elektrischen Parameter an der elektrischen Last unter wechselnden Lastbedingungen kontinuierlich überwacht;
wobei der Mikrocontroller (108) ferner so konfiguriert ist, dass er einen optimalen Referenzwert bestimmt, der dem Ausgangsstrom und der Ausgangsspannung, die an die elektrische Last geliefert werden, basierend mindestens auf dem Leistungslastmuster entspricht, wobei der Mikrocontroller (108) ferner so konfiguriert ist, dass er einen Spannungsregler (106) ansteuert, um den Ausgangsstrom und die Ausgangsspannung, die an die elektrische Last geliefert werden, auf den optimalen Referenzwert zu regeln, indem er die vorbestimmten elektrischen Parameter, die das Lastmuster charakterisieren, iterativ anpasst;
wobei der Mikrocontroller (108) ferner so konfiguriert ist, dass er eine lastseitige Ausgangsleistung auf der Grundlage der Messdaten, die der am Stromversorgungsende gelieferten Eingangsspannung entsprechen, und unter Verwendung einer durch folgende Gleichung definierten Beziehung prognostiziert: ${P}_{k} = {\sum }_{i = 0}^{n} {aiV}^{i} \left(k\right)$, wobei Pk eine prognostizierte lastseitige Ausgangsleistung zu einem Zeitpunkt "k", Vi(k) eine Eingangsspannung zu einem Zeitpunkt "k", "a" ein Koeffizient eines über einen Zeitraum "n" geschätzten Anpassungsparameters ist, wobei der Mikrocontroller (108) ferner so konfiguriert ist, dass er die prognostizierte lastseitige Ausgangsleistung mit einer lastseitigen Ausgangsleistung vergleicht, die auf der Grundlage des Ausgangsstroms und der Ausgangsspannung, die an eine elektrische Last geliefert werden, berechnet wurde, und die daraus resultierenden Energieeinsparungen prognostiziert.

2. Das System (100) nach Anspruch 1, wobei der optimale Referenzwert ein Wert ist, der eine optimale Spannung angibt.

3. Das System nach Anspruch 1, wobei der Mikrocontroller (108) ferner ein Speichermodul (110) umfasst, das so konfiguriert ist, dass es eine Vielzahl von historischen Lastmustern und entsprechenden historischen optimalen Referenzwerten speichert.

4. Das System (100) nach Anspruch 1 oder 3, wobei der Mikrocontroller (108) so konfiguriert ist, dass er selektiv auf das Speichermodul (110) zugreift und das den Messdaten entsprechende Leistungslastmuster mit jedem der darin gespeicherten historischen Leistungslastmuster vergleicht, wobei der Mikrocontroller (108) ist ferner so konfiguriert, dass er mindestens ein historisches Lastmuster identifiziert, das mit dem den Messdaten entsprechenden Lastmuster übereinstimmt, wobei der Mikrocontroller (108) ist zudem so konfiguriert, dass er einen historischen optimalen Referenzwert extrahiert, der dem identifizierten historischen Leistungslastmuster entspricht, und den Spannungsregler (106) veranlasst, den Ausgangsstrom und die Ausgangsspannung, die an die elektrische Last geliefert werden, auf diesen historischen optimalen Referenzwert zu regeln, indem die dem Leistungslastmuster entsprechenden vorbestimmten elektrischen Parameter iterativ angepasst werden.

5. Das System (100) nach Anspruch 1, wobei der Mikrocontroller (108) ferner so konfiguriert ist, dass er die resultierenden Energieeinsparungen prognostiziert, indem er eine Differenz zwischen der prognostizierten lastseitigen Ausgangsleistung und der lastseitigen Ausgangsleistung ermittelt, die auf der Grundlage des Ausgangsstroms und der Ausgangsspannung berechnet wurde, die an die elektrische Last geliefert werden.

6. Das System (100) nach Anspruch 1, wobei der Mikrocontroller (108) kommunikativ mit einem cloudbasierten Computerspeichernetzwerk (112) gekoppelt ist, wobei der Mikrocontroller (108) so konfiguriert ist, dass er mindestens entweder die Messdaten, die Leistungslastmuster, die optimierten Referenzwerte oder die Werte, die den kumulativen Energieeinsparungen entsprechen, an das cloudbasierte Computerspeichernetzwerk (112) überträgt.

7. Das System (100) nach Anspruch 1, wobei die mehreren Sensoren (102, 104), der Mikrocontroller (108) und der Spannungsregler (106) in einem einzigen Gehäuse untergebracht sind.

## Revendications

1. Un système (100) destiné à optimiser le courant de sortie et la tension de sortie délivrés à une charge électrique, ledit système (100) étant configuré pour optimiser la fourniture du courant de sortie et de la tension de sortie délivrés à la charge électrique, ledit système (100) comprenant :
une pluralité de capteurs (102, 104), au moins certains desdits capteurs (102) étant configurés pour détecter le courant de sortie et la tension de sortie délivrés à la charge électrique, et le reste de ladite pluralité de capteurs (104) étant configuré pour détecter une tension d'entrée générée à une extrémité d'alimentation électrique, chacun desdits capteurs de la pluralité (102, 104) étant en outre configuré pour générer des données de mesure correspondant au courant de sortie et à la tension de sortie délivrés à la charge électrique et à la tension d'entrée générée au niveau de ladite extrémité d'alimentation électrique ;
un microcontrôleur (108) configuré pour analyser les données de mesure et générer au moins un profil de charge de puissance, sur la base, au moins en partie, des données de mesure analysées, ledit profil de charge de puissance étant **caractérisé par** une pluralité de paramètres électriques prédéterminés sélectionnés dans le groupe constitué de la puissance active, de la puissance réactive, de la puissance apparente, de la distorsion harmonique totale (THD) et du facteur de puissance (PF), ledit microcontrôleur étant configuré pour surveiller en continu lesdits paramètres électriques au niveau de ladite charge électrique pour des conditions de charge variables ;
ledit microcontrôleur (108) étant en outre configuré pour déterminer une valeur de référence optimale correspondant au courant de sortie et à la tension de sortie délivrés à la charge électrique, sur la base au moins dudit profil de charge de puissance, ledit microcontrôleur (108) étant en outre configuré pour déclencher un régulateur de tension (106) afin de réguler le courant de sortie et la tension de sortie délivrés à ladite charge électrique jusqu'à ladite valeur de référence optimale, en ajustant itérativement lesdits paramètres électriques prédéterminés caractérisant ledit profil de charge de puissance ;
ledit microcontrôleur (108) étant en outre configuré pour prévoir une puissance de sortie côté charge sur la base des données de mesure correspondant à la tension d'entrée délivrée au niveau de l'extrémité d'alimentation électrique, et en utilisant une équation définie par : *Pₖ* = dans laquelle Pₖ est une puissance de sortie prévue côté charge à un instant 'k', Vi(k) est une tension d'entrée à un instant 'k', 'a' est un coefficient d'un paramètre d'ajustement estimé sur une période de temps 'n', ledit microcontrôleur (108) étant en outre configuré pour comparer la puissance de sortie prévue côté charge avec une puissance de sortie côté charge calculée sur la base du courant de sortie et de la tension de sortie délivrés à la charge électrique, et prévoir les économies d'énergie résultantes.

2. Le système (100) selon la revendication 1, dans lequel ladite valeur de référence optimale est une valeur indiquant une tension optimale.

3. Le système selon la revendication 1, dans lequel ledit microcontrôleur (108) comprend en outre un module de mémoire (110) configuré pour stocker une pluralité de profils de charge de puissance historiques et de valeurs de référence optimales historiques correspondantes.

4. Le système (100) selon la revendication 1 ou 3, dans lequel ledit microcontrôleur (108) est configuré pour accéder sélectivement au module de mémoire (110) et comparer le profil de charge de puissance correspondant aux données de mesure à chacun des profils de charge de puissance historiques qui y sont stockés, ledit microcontrôleur (108) étant en outre configuré pour identifier au moins un profil de charge de puissance historique correspondant au profil de charge de puissance correspondant aux données de mesure, ledit microcontrôleur (108) étant encore configuré pour extraire une valeur de référence optimale historique correspondant au profil de charge de puissance historique identifié, et déclencher le régulateur de tension (106) afin de réguler le courant de sortie et la tension de sortie délivrés à ladite charge électrique jusqu'à ladite valeur de référence optimale historique, en ajustant itérativement les paramètres électriques prédéterminés correspondant au profil de charge de puissance.

5. Le système (100) selon la revendication 1, dans lequel ledit microcontrôleur (108) est en outre configuré pour prévoir les économies d'énergie résultantes en déterminant une différence entre la puissance de sortie prévue côté charge et la puissance de sortie côté charge calculée sur la base du courant de sortie et de la tension de sortie délivrés à la charge électrique.

6. Le système (100) selon la revendication 1, dans lequel ledit microcontrôleur (108) est couplé de manière communicante à un réseau de stockage informatique basé sur le cloud (112), ledit microcontrôleur (108) étant configuré pour transférer audit réseau de stockage informatique basé sur le cloud (112) au moins l'une desdites données de mesure, les profils de charge de puissance, les valeurs de référence optimisées et les valeurs correspondant aux économies d'énergie cumulées.

7. Le système (100) selon la revendication 1, dans lequel ladite pluralité de capteurs (102, 104), ledit microcontrôleur (108) et ledit régulateur de tension (106) sont incorporés dans un boîtier unique.
